# EUROPÄISCHE PATENTSCHRIFT

(11) **EP 1 070 217 B1**
(45) Veröffentlichungstag und Bekanntmachung des Hinweises auf die Patenterteilung: **24.04.2002**
(21) Anmeldenummer: 98956756.5
(22) Anmeldetag: 09.12.1998
(51) Int. Cl.: F16L 33/02, F16B 2/08

(54) **ANORDNUNG ZUM VERBINDEN ZWEIER BANDENDKANTEN, BEISPIELSWEISE EINES KLEMMRINGES ODER EINES SCHRUMPFRINGES**
ARRANGEMENT FOR CONNECTING THE EDGES OF TWO STRIPS, FOR INSTANCE OF A LOCKING RING OR BAND
CONFIGURATION DE LIAISON DES DEUX EXTREMITES D'UNE BANDE, PAR EXEMPLE, D'UN ANNEAU OU D'UNE BAGUE DE SERRAGE

(30) Priorität: 02.02.1998 CH 24098
(43) Veröffentlichungstag der Anmeldung: 24.01.2001
(73) Patentinhaber: Hans Oetiker AG, 8810 Horgen (CH)
(72) Erfinder: OETIKER, Hans, CH-8810 Horgen (CH)
(74) Vertreter: Troesch Scheidegger Werner AG
(86) Internationale Anmeldenummer: CH9800521
(87) Internationale Veröffentlichungsnummer: WO9939123

(56) Entgegenhaltungen:
- EP-A- 0 543 338
- EP-A- 0 802 333
- US-A- 5 001 816
- US-A- 5 150 503

## Beschreibung

Die vorliegende Erfindung betrifft eine Anordnung gemäss dem Oberbegriff nach Anspruch 1, eine Klemme oder Rohrklemme mit einer Anordnung sowie einen Pressring bzw. Schrumpfring mit einer Anordnung.

Für das Festklemmen von rohrförmigen Elementen auf einem entsprechenden peripheren Bereich eines zylinderartigen Formteiles, wie beispielsweise einer Welle oder eines weiteren Rohres, werden in bekannter Art und Weise sog. Klemmringe verwendet.

Die Verwendung von Klemmringen mit sog. Ohren, eine an sich bewährte Praxis, ist in gewissen Fällen nicht geeignet. Insbesondere beispielsweise dann, wenn die Platzverhältnisse keine herausragenden Ohren zulassen.

In diesen Fällen haben sich sog. Klemm- oder Pressringe bewährt, die für das Festklemmen entweder aussen auf die Verbindung aufgeschrumpft oder aufgrepresst werden oder durch Dehnen des zylinderförmigen Formteiles die beiden Rohre aneinander pressen.

Derartige Klemmen oder Pressringe werden dadurch gefertigt, dass aus Rohren mit gefordertem Durchmesser ringartige Segmente herausgesägt, gestanzt oder geschnitten werden. Diese Herstellungsart hat sich als nachteilig erwiesen, und zwar deshalb, weil
a) die frisch erzeugten Rohre an ihren äusseren Ringlängsseiten entgratet werden müssen, was einen weiteren Arbeitsschritt erfordert,
b) nur rostfreie Materialien und keine z.B. verzinkten Rohre verwendet werden können, da die Ringe an den Längsseiten verletzt sind, d.h. die Verzinkung fehlt, und weil
c) mit einem Rohrdurchmesser nur eine Ringgrösse hergestellt werden kann.

Eine weitere Möglichkeit besteht im "Aufstülpen" von sog. Unterlagsscheiben, wobei für diesen Vorgang grössere Kräfte anzuwenden sind und zudem im Ringteil grosse innere Spannungen vorhanden sind. Auch lassen sich mit einer bestimmten Grösse einer Unterlagsscheibe nicht Ringe mit beliebigem Durchmesser erzeugen.

Eine weitere Möglichkeit bestünde im Herstellen eines Ringes aus einem entsprechenden bandartigen Teil, das aus einem Endlosband herausgeschnitten worden ist, durch ringförmiges Biegen des Teiles. Doch hat es sich gezeigt, dass die Verbindung der beiden Endpartien des Bandes einen Schwachpunkt darstellen und dass diese Verbindung insbesondere Belastungen auf Zug und Stauchung nicht standhalten.

Aus der DE-40 09 259 ist eine Anordnung bekannt zum Verbinden zweier endständiger Bandabschnittkanten für die Herstellung einer Klemme bzw. eines sogenannten Schrumpfringes, welche insbesondere auf Zug und Stauchung belastbar ist. Diese Verbindung kann weiter verbessert werden, indem entlang der Verbindungslinie der ineinandergreifenden Abschnitte entlang der Verbindungskante lasergeschweisste Punktschweissungen vorgesehen sind, oder aber Abschnitte, welche pressgeprägt sind. Eine derartige Verbindung gemäss der DE-40 09 259 ist in Fig. 1 dargestellt. Allerdings hat es sich bei relativ schmalen Bändern bzw. Schrumpfringen, insbesondere hergestellt aus Aluminium, gezeigt, dass die Belastbarkeit zu gering ist bzw. die Verbindung bei sehr hoher Zugbelastung ausreisst.

Eine weitere Anordnung wird in der DE 40 21 746 vorgeschlagen, wo wiederum zwei freie Bandenden miteinander verbunden werden unter Verwendung einer mittigen, zungenartigen Lasche mit tannenbaumförmig ausgebildeten Eingriffsverbindungen. Allerdings ist in der DE 40 21 746 nachteilig, dass zur Verhinderung eines seitlichen Ausscherens der beidseitig an der Zunge anliegenden Verschlusslaschen die Eingriffsverbindungen vriderhakenförmig mit spitzen Winkeln ausgebildet sind, was eine nicht geringe Verletzungsgefahr bei der Handhabung entsprechender Klemm- oder Spannringe in sich birgt.

Es ist daher eine Aufgabe der vorliegenden Erfindung, aufbauend beispielsweise auf einer Verbindung zweier Bandendkanten gemäss der DE-40 09 259, eine Verbindung vorzuschlagen, welche einerseits erhöhter Zugbelastung standhält und welche andererseits die Nachteile der DE 40 21 746 nicht aufweist. Erfindungsgemäss wird die gestellte Aufgabe mittels einer Anordnung gemäss dem Wortlaut nach Anspruch 1 gelöst.

Vorgeschlagen wird, dass analog der DE-40 09 259 die eine Endkante bzw. der eine Bandabschnitt mindestens einen zungenartigen Vorsprung in Bandlängsrichtung aufweist, welcher in einer entsprechenden Aussparung in der anderen Kante bzw. im anderen Bandabschnitt eingreift, wobei sich der Vorsprung im wesentlichen in Richtung senkrecht zu der Kante im ersten Bandabschnitt bzw. in Längsrichtung zum Band erstreckt und mindestens zwei Abschnitte aufweist, welche in Richtung des Vorsprunges bzw. in Bandlängsrichtung zueinander beabstandet angeordnet sind und welche in Kantenrichtung bzw. in Bandquerrichtung je einen Bereich im anderen Bandabschnitt hintergreifen.

Der zungenartige Vorsprung weist mindestens zwei in Bandlängsrichtung beabstandete Abschnitte auf, welche je an beiden Seiten des Vorsprunges den anderen Bandabschnitt hintergreifen bzw. in der Aussparung des anderen Bandabschnittes an dieser formschlüssig hintergreifend anliegen. Die gesamte Kontur des zungenartigen Vorsprunges ist abgerundet ausgebildet, um das Ausbilden von spitzigen Ecken zu vermeiden. Sei dies, um ein Abbrechen zu vermeiden oder aber, um die Verletzungsgefahr zu vermindern.

Gemäss einer Ausführungsvariante ist mindestens ein Teil der seitlich vom Vorsprung vorstehenden und den anderen Bandabschnitt hintergreifenden Abschnitte derart ausgebildet, dass sie je eine Ausdehnung aufweisen, welche sich wieder in Richtung zurück zum einen Bandabschnitt in Bandlängsrichtung erstrecken.

Weitere bevorzugte Ausführungsvarianten der erfindungsgemässen Anordnung sind in den abhängigen Ansprüchen 2 bis 12 charakterisiert.

Die erfindungsgemäss definierte Anordnung eignet sich insbesondere für das Erzeugen einer Klemme bzw. für das Verbinden und Erzeugen einer Rohrklemme, wie insbesondere eines sogenannten Klemm- oder Schrumpfringes.

Die Erfindung wird nun anschliessend beispielsweise und unter Bezug auf die beigefügten Figuren näher erläutert.

Dabei zeigen:
- Fig. 1: eine Verbindung zweier Bandendkanten gemäss der DE-40 09 259, d.h. bekannt aus dem Stand der Technik,
- Fig. 2: eine erfindungsgemässe Anordnung zum Verbinden zweier Bandendkanten,
- Fig. 3: die Anordnung gemäss Fig. 2 in auseinandergezogener Darstellung,
- Fig. 4: einen Klemmring bzw. eine Rohrklemme, aufweisend eine erfindungsgemässe Anordnung im nicht verbundenen, geöffneten Zustand,
- Fig. 5: eine Verbindung einer Welle mit einem balgartigen Rohr unter Verwendung einer erfindungsgemässen Klemme bzw. eines Pressringes und
- Fig. 6a und 6b: die Ausrisslinien einer Anordnung gemäss dem Stand der Technik und einer erfindungsgemässen Anordnung bei Zugbelastung.

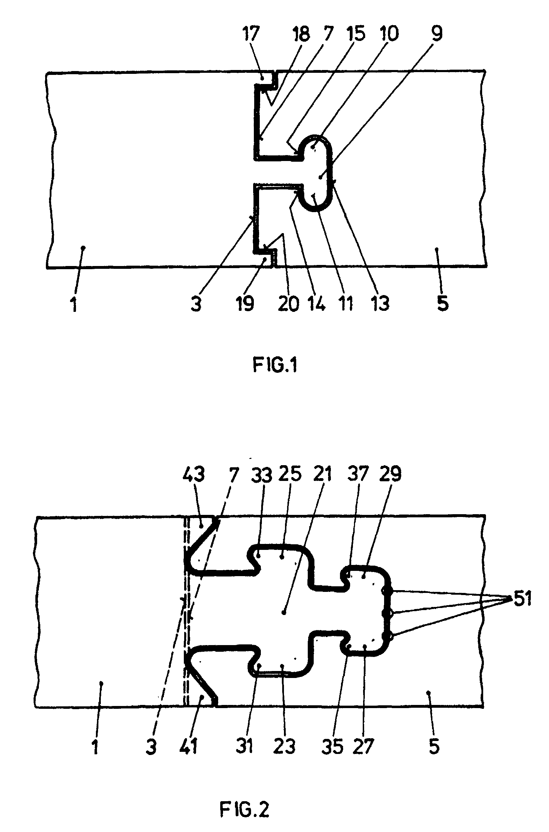

Fig. 1 zeigt eine mögliche Ausführungsvariante einer Verbindung zweier Bandquerendkanten bekannt aus dem Stand der Technik, beispielsweise geeignet für das schliessende Verbinden einer Rohrklemme. Die beiden endständigen Bandabschnitte 1 und 5 sind entlang ihrer gemeinsamen Kanten 3 resp. 7 miteinander verbunden. An der einen Kante 3 angeordnet ist ein Rückhalteelement bzw. ein Vorsprung oder eine Zunge 9, die seitliche, vorstehende, laschenartige Elemente umfasst. Der Vorsprung bzw. die Zunge 9 umfasst zwei derartige Laschen 10 und 11, wobei die Zunge zusammen mit den beiden Laschen in entsprechende deckungsgleiche Aussparungen im Bandabschnitt 5 eingreifen, welche der Einfachheit halber nicht mit Referenzzahlen bezeichnet sind. Die Zunge bzw. der Vorsprung 9 hintergreift mittels der beiden Laschen bzw. Abschnitte 10 und 11 die entsprechende Aussparung in Kantenrichtung entlang der beiden Partien 14 und 15.

Wenn nun die Verbindung gemäss Fig. 1 auf Zug oder Stauchung beansprucht wird, besteht die Tendenz der Bereiche des Bandabschnittes 5, die hinter den Partien 14 und 15 angeordnet sind, sich seitlich vom Vorsprung bzw. der Zunge 9 wegzubewegen, wodurch der Vorsprung 9 aus der entsprechenden Aussparung herausgezogen bzw. herausgestossen werden kann. Um dieser Tendenz des seitlichen Ausscherens dieser beiden Bereiche entgegenzuwirken, sind nun die beiden Vorsprünge 17 und 19 an der einen Kante 3 angeordnet. Diese beiden Vorsprünge 17 und 19 liegen an den Partien 18 und 20 des flächigen Bandabschnittes 5 an und wirken so gegen ein seitliches Ausscheren der beiden Bereiche hinter den Partien 18 und 20, respektive hinter den Partien 14 und 15.

Zusätzlich ist es nun möglich, entlang der Verbindungslinien bzw. der Kanten 3 und 7 Laserpunkt-geschweisste Bereiche vorzusehen, um eine weitere Verbesserung der Verbindung zu erzielen. Auch ist es möglich, Pressprägungen entlang der Kante vorzusehen, um eine weitere Verbesserung der Verbindung zu erreichen.

Wie bereits vorab erwähnt, hat es sich aber in der Praxis gezeigt, dass Verbindungen analog derjenigen, dargestellt in Fig. 1 und bekannt aus der DE-40 09 259, bei schmalen Bändern, beispielsweise hergestellt aus Aluminium, den heute geforderten hohen Zugbelastungen nicht mehr standhalten und es gelegentlich zum Ausreissen des Vorsprunges 9 aus dem Bandabschnitt 5 kommen kann.

Aus diesem Grunde wird nun erfindungsgemäss eine Anordnung bzw. Verbindung zweier Bandabschnitte gemäss der Darstellung in Fig. 2 vorgeschlagen. Wiederum sind die beiden Bandabschnitte 1 und 5, beispielsweise einer Rohrklemme, miteinander zu verbinden, wobei gestrichelt imaginäre Verbindungskanten 3 und 7 dargestellt sind. Von der einen Verbindungskante 3 in den anderen Bandabschnitt 5 vorstehend bzw. in diesen eingreifend ist wiederum ein Rückhalteelement bzw. ein Vorsprung oder eine Zunge 21 angeordnet, allerdings nun aufweisend in Längsrichtung beabstandet mehrere Abschnitte bzw. Laschen, welche Bereiche im anderen Bandabschnitt hintergreifen. In Fig. 2 deutlich erkennbar sind die vom Vorsprung 21 seitlichen Laschen bzw. Abschnitte 23, 25, 27 und 29, welche in entsprechenden, geometrisch dekkungsgleichen Aussparungsbereichen im anderen Bandabschnitt 5 eingreifen, welche wiederum der Einfachheit halber nicht mit eigenen Referenzzahlen versehen sind. Als vorteilhaft hat sich nun erwiesen, wenn diese seitlich vorstehenden Abschnitte bzw. Laschen zusätzlich "rückwärts gerichtete" Bereiche bzw. Ausdehnungen 31, 33, 35 und 37 umfassen, welche in Vorsprungsrichtung rückwärts ausgedehnt sind, respektive wieder in Richtung zurück zur imaginären Kante 3 bzw. 7 gerichtet sind.

Analog der beiden zusätzlichen Vorsprünge 17 und 19 aus Fig. 1 weist auch die Anordnung gemäss Fig. 2 je seitlich im Bereich der Bandlängskanten einen weiteren Vorsprung 41 resp. 43 auf, welcher aber nun je wenigstens entlang eines Abschnittes der Verbindung der beiden Kanten schrägwinklig in bezug auf die seitlichen Längskanten ausgebildet ist. Grundsätzlich aber haben die beiden zusätzlichen Vorsprünge 41 und 43 dieselbe Funktion wie die beiden Vorsprünge 17 und 19 in der Verbindungsanordnung gemäss Fig. 1.

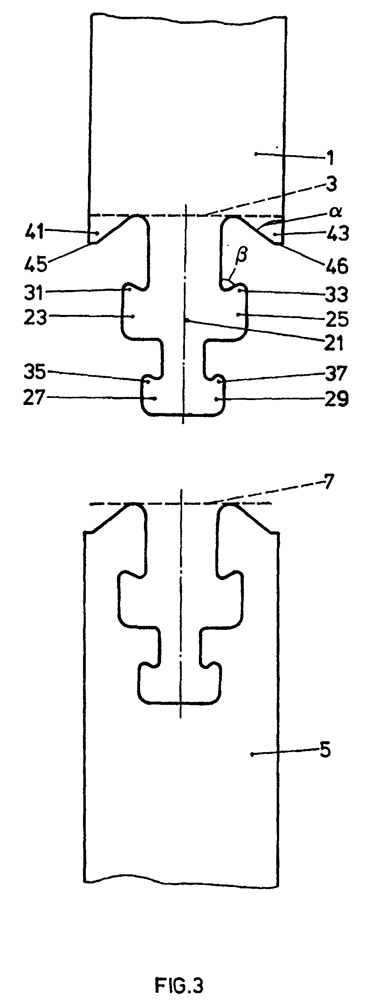

In Fig. 3 ist die Verbindung gemäss Fig. 2 im auseinandergezogenen Zustand dargestellt. Dabei ist nun deutlich erkennbar, dass die seitlichen Laschen bzw. Abschnitte 23, 25, 27 und 29 nach rückwärts gerichtete Abschnitte 31, 33, 35 und 37 aufweisen. Dabei hat es sich als vorteilhaft erwiesen, wenn die je nach rückwärts gerichtete Begrenzungslinie dieser Bereiche bzw. Ausdehnungen gegenüber der Bandlängsrichtung bzw. der Längsrichtung des Vorsprunges bzw. der Zunge 21 einen Winkel β einschliesst, welcher im Bereich von ca. 50 - 70° liegt, vorzugsweise ca. 60°. Weiter ist es vorteilhaft, wenn die Breite der Zunge bzw. des Vorsprunges 21 zwischen dem ersten Bandabschnitt und den beiden ersten, je seitlich vorstehenden Abschnitten bzw. Laschen 23 und 25 grösser ist als die Breite zwischen den beiden ersten seitlich vorstehenden Abschnitten bzw. Laschen 23 und 25 und den beiden endständig ausgebildeten, seitlichen Abschnitten bzw. Laschen 27 und 29.

In bezug auf die beiden seitlichen weiteren Vorsprünge 41 und 43 im Bereich der Bandlängskanten ist zu bemerken, dass die schräge Begrenzungslinie vorzugsweise mit der Bandlängsrichtung einen Winkel α einschliesst im Bereich von ca. 40 -60°, vorzugsweise ca. 50°. Zudem ist je nahe an der jeweiligen Längskante des ersten Bandabschnittes 1 bzw. entsprechend am zweiten Bandabschnitt 5 je eine Abstufung vorgesehen, um zu vermeiden, dass die beiden Vorsprünge 41 und 43 je eine Spitze aufweisen. Dies würde einerseits die Gefahr des Abbrechens dieser Spitze in sich bergen sowie auch eine mögliche Verletzungsgefahr.

Schlussendlich ist aus Fig. 3 deutlich erkennbar, dass beinahe sämtliche Eckbereiche entlang der effektiven Endkante des Bandabschnittes 1 bzw. entsprechend entlang des zweiten Bandabschnittes 5 entlang der gesamten Kontur des Vorsprunges bzw. der Zunge 21 abgerundet ausgebildet sind, um erneut das Ausbilden von spitzigen Ecken zu vermeiden. Sei dies, um ein Abbrechen zu vermeiden oder aber, um die Verletzungsgefahr zu vermindern.

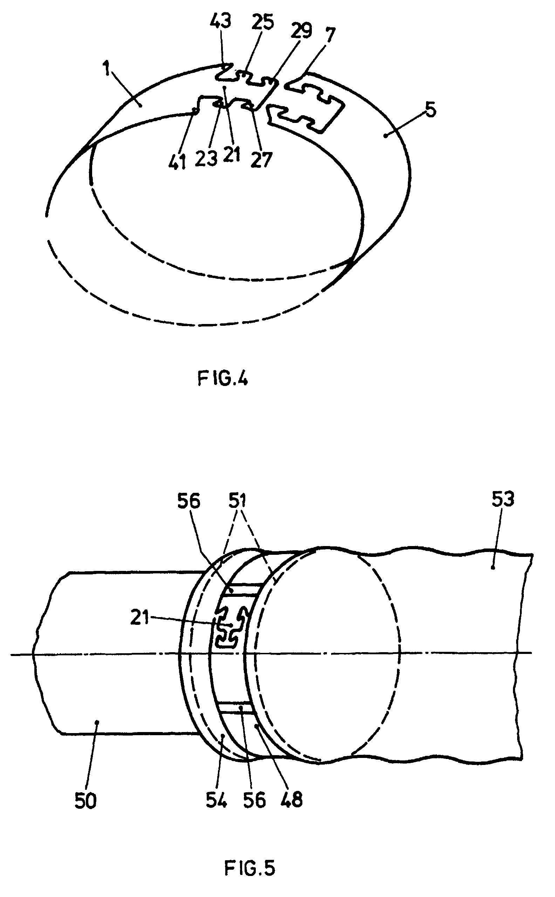

Fig. 4 zeigt nun eine erfindungsgemässe Klemme oder einen Klemmring, bestehend aus einem Klemmband mit den beiden Endpartien 1 und 5. Der Klemmring ist im geöffneten, nicht verbundenen Zustand dargestellt. Das Klemmband kann ein- oder mehrteilig sein, mit entsprechend einer oder mehreren erfindungsgemässen Verbindungsanordnungen.

Die beiden Abschlusskanten an den endständigen Bandabschnitten 1 und 5 sind analog der Ausführungsvariante in den Fig. 2 und 3 mit Verbindungselementen versehen. Am Bandabschnitt 1 ist endständig der Vorsprung bzw. die Zunge 21 mit beidseitig vorstehenden Laschenteilen 23, 25, 27 und 29 angeordnet. Im anderen Bandabschnitt 5 ist eine entsprechende Aussparung vorgesehen.

Seitlich der Zunge bzw. des Vorsprunges 21 sind die weiteren Vorsprünge 41 und 43 angeordnet, welche wiederum dazu vorgesehen sind, um in entsprechenden Aussparungen im anderen Bandabschnitt einzugreifen.

Je nach gewünschtem Durchmesser des Klemm- oder Pressringes kann von einem Endlosband ein entsprechender Bandabschnitt abgeschnitten werden. An den beiden endständigen Partien 1 und 5 dieses Bandes werden entsprechend einerseits die Zunge bzw. der Vorsprung 21 zusammen mit den beiden weiteren Vorsprüngen 41 und 43 ausgestanzt und im gegenüberliegenden Bandabschnitt 5 die entsprechenden Aussparungen. Durch Zusammenführen der beiden endständigen Bandabschnitte 1 und 5 und durch Biegen der Bandabschnitte und Zusammenfügen wird nun der Klemmring hergestellt. Zur Fixierung der Verbindung können, wie bereits oben erwähnt und in Fig. 2 endständig dargestellt und mit der Referenzzahl 51 bezeichnet, Präge- oder Quetschstellen angeordnet werden, beispielsweise mittels Laserschweissen oder durch Pressprägen.

In Fig. 5 ist eine erfindungsgemässe Klemme oder ein Pressring gemäss Fig. 4 anhand einer praxisbezogenen Anwendung im verbundenen, geschlossenen Zustand dargestellt. Eine Welle 50 umfasst eine endständige Partie 51 mit einem grösseren Durchmesser als die Welle 50. Mit dieser Welle zu verbinden ist ein balgartiges Rohr 53, das mit seiner endständigen Partie 54 über den Bereich 51 aufgeschoben wird, um mit der Welle 50 fest verbunden zu werden. Eine derartige Verbindung kann beispielsweise im Automobilbau vorkommen, wo Radachsen, Antriebs- und Gelenkwellen durch Faltenbälge geschützt oder von diesen umgeben werden. Auch hier wird der Gummi- oder Faltenbalg auf einem Gegenstück, z.B. auf der Welle, gehalten.

Nach dem Überschieben des Balges 53 mit seiner Partie 54 über den Bereich 51 wird nun der Klemmring über den aufgeschobenen Bereich 54 ebenfalls aufgeschoben. Wiederum greift eine Zunge bzw. ein Vorsprung 21 in eine entsprechende Aussparung, und die seitlichen weiteren Vorsprünge liegen an entsprechenden Partien des gegenüberliegenden Bandabschnittes des Klemmbandes bzw. Pressringes 48 an. Damit die beiden Bandenden fix miteinander verbunden sind, kann die Verbindung wiederum Präge- oder Quetschstellen bzw. lasergeschweisste Punktschweissungen umfassen, wie bereits unter Bezug auf Fig. 4 erwähnt.

Nach dem Anordnen des Klemmringes oder Pressringes 48 über den aufgeschobenen Bereich 54 werden nun geeignete Werkzeuge, wie Klemmbacken (nicht dargestellt), um den Klemmring angeordnet, und zum Zusammendrücken dieser Backen wird der Ring auf den Bereich 54 aufgepresst. Durch diesen Pressvorgang wird der Durchmesser des Klemmringes verkleinert, und es entstehen Presszonen 56 am Klemmring 48. Nun ist der Balg 53 fest mit der Welle 50 verbunden. Die Verbindung kann natürlich auch dadurch hergestellt werden, indem statt des Aufpressens der innere Bereich 51 radial nach aussen gedehnt wird, womit wiederum schlussendlich der Klemmring von aussen den Balg am aufgeschobenen Bereich 54 auf den inneren Bereich 51 festklemmt.

Der in Fig. 5 erläuterte Vorgang kann selbstverständlich für das Verbinden von x-beliebigen wellenartigen und rohrförmigen Elementen mittels eines Klemm- oder Pressringes verwendet werden.

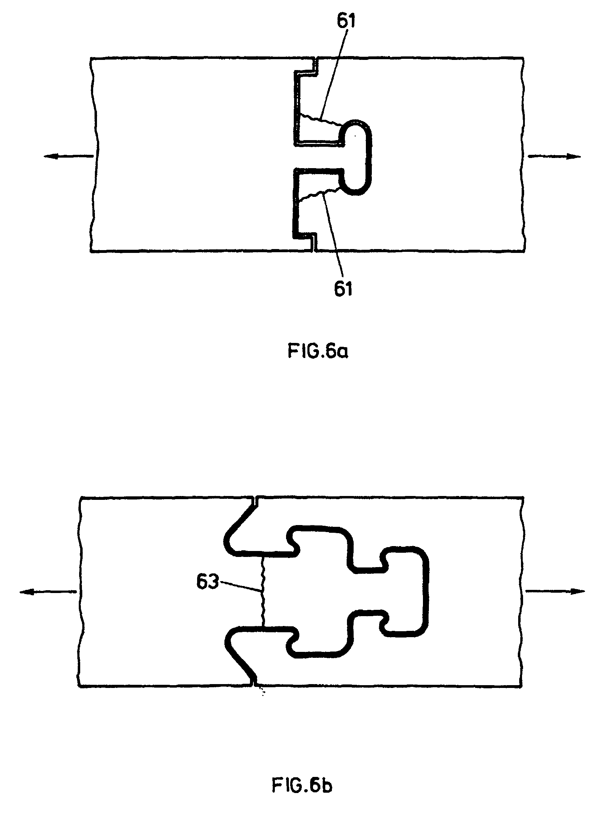

In den Fig. 6a und 6b ist je die Abreisslinie dargestellt, entlang welcher eine Verbindung aus dem Stand der Technik und eine erfindungsgemässe Verbindung auf erhöhte Zugbelastung ausbricht. In Fig. 6a ist eine Verbindungsanordnung gemäss der DE-40 09 259 bzw. gemäss Fig. 1 dargestellt, wobei bei Zugbelastung in Pfeilrichtung die Verbindung entlang der Linie 61 ausreisst.

Demgegenüber wird bei Zugbelastung in Pfeilrichtung eine erfindungsgemässe Verbindung, dargestellt in Fig. 6b, entlang der Abreisslinie 63 ausreissen, wobei bei gleicher Bandbreite, Dikke und beim gleichen Material ein Ausreissen erst bei einer ca. 30 bis 40 % höheren Zugbelastung auftritt. Insbesondere bei Verwendung von Aluminium und bei sehr schmalen Pressringen bzw. Rohrklemmen ist diese erhöhte Belastbarkeit auf Zug wesentlich. Allerdings ergibt sich diese erhöhte Belastbarkeit auf Zug auch bei anderen Materialien, wie rostfreiem oder verzinktem Stahl, anderen Metallegierungen oder bei verstärkten Kunststoffen.

Bei den in den Fig. 2 bis 6 dargestellten erfindungsgemässen Verbindungsanordnungen handelt es sich selbstverständlich nur um Beispiele, welche in x-beliebiger Art und Weise abgeändert, modifiziert oder ergänzt werden können. So ist es selbstverständlich auch möglich, anstelle des einen dargestellten, zungenförmigen Vorsprunges mehrere derartige zungenartige Vorsprünge vorzusehen, welche je die in Längsrichtung bzw. Vorsprungsrichtung beabstandeten seitlichen Laschen aufweisen. Auch können mehr als zwei Querelemente pro Vorsprung bzw. Zunge in Längsrichtung des Bandes beabstandet angeordnet werden, und nicht alle der seitlichen Laschen müssen nach rückwärts gerichtete Abschnitte aufweisen. Auch kann die Breite des Vorsprunges bzw. der Zunge variiert bzw. der Bandbreite angepasst werden.

Grundsätzlich können sämtliche Vorsprungs- bzw. Zungenformen, beschrieben in der DE-40 09 259, auf die vorliegende Verbindungsanordnung übertragen werden mit dem Unterschied, dass in Bandlängsrichtung an mindestens einem Vorsprung bzw. einer Zunge mindestens zwei in Bandlängsrichtung beabstandete, seitlich vom Vorsprung bzw. der Zunge vorstehende Abschnitte bzw. Laschen vorzusehen sind.

## Patentansprüche

1. Anordnung zum Verbinden zweier Bandendkanten (3, 7), beispielsweise einer Klemme bzw. eines Klemmringes oder Schrumpfringes, wobei die eine Endkante (3) mindestens einen zungenartigen Vorsprung (21) aufweist, welcher in einer entsprechenden Aussparung in der anderen Kante (7) bzw. dem anderen Bandabschnitt (5) eingreift, wobei sich der Vorsprung (21) im wesentlichen in Bandrichtung in den anderen Bandabschnitt (5) erstreckt und mindestens zwei Abschnitte (23, 25, 27, 29) aufweist, welche in Richtung des Vorsprunges bzw. in Bandlängsrichtung beabstandet sind und welche je quer zur Bandlängsrichtung seitlich vom Vorsprung vorstehend je einen Bereich im anderen Bandabschnitt (5) hintergreifen, **dadurch gekennzeichnet, dass** im Bereich jeder seitlichen Bandlängskante im Bereich der Verbindung die eine Kante (3) je einen weiteren Vorsprung (41, 43) in Richtung zum anderen Bandabschnitt (5) aufweist, und dass die gesamte Kontur des zungenartigen Vorsprunges (21) abgerundet ausgebildet ist, um das Ausbilden von spitzen Ecken zu vermeiden, um die Verletzungsgefahr zu vermindern.

2. Anordnung nach Anspruch 1, **dadurch gekennzeichnet, dass** der Vorsprung (21) an mindestens zwei in Vorsprungsrichtung bzw. Bandlängsrichtung beabstandeten Abschnitten (23, 25, 27, 29) je auf beiden Seiten des Vorsprunges den anderen Bandabschnitt (5) hintergreift bzw. in der entsprechenden Aussparung des anderen Bandabschnittes (5) an dieser formschlüssig hintergreifend anliegt.

3. Anordnung nach einem der Ansprüche 1 oder 2, **dadurch gekennzeichnet, dass** mindestens ein Teil der seitlich vom Vorsprung (21) vorstehenden und den anderen Bandabschnitt (5) hintergreifenden Abschnitte (23, 25, 27, 29) je eine Ausdehnung (31, 33, 35, 37) wieder in Bandrichtung zurück zum einen Bandabschnitt (1) aufweist.

4. Anordnung nach Anspruch 3, **dadurch gekennzeichnet, dass** die in Richtung zum einen Bandabschnitt (1) zurück ausgebildeten Ausdehnungen (31, 33, 35, 37) jedes seitlichen Abschnittes (23, 25, 27, 29) je eine schräg zur Vorsprungsrichtung bzw. Bandlängsrichtung verlaufende, gegen den einen Bandabschnitt hin gerichtete Begrenaungslinie aufweist.

5. Anordnung nach Anspruch 4, **dadurch gekennzeichnet, dass** die im wesentlichen quer zur Bandlängsrichtung verlaufende Begrenzungslinie jeder Ausdehnung (31, 33, 35, 37) mit der Längsrichtung einen Winkel (β) von ca. 50 - 70°, vorzugsweise von ca. 60°, einschliesst.

6. Anordnung nach einem der Ansprüche, 1 bis 5, **dadurch gekennzeichnet, dass** der Vorsprung (21) eine grössere Breite aufweist zwischen dem einen Bandabschnitt (1) und dem ersten seitlich vorstehenden Abschnitt (23, 25) als zwischen dem ersten und dem zweiten seitlich vorstehenden Abschnitt (27, 29).

7. Anordnung nach einem der Ansprüche 1 bis 6, **dadurch gekennzeichnet, dass** jeder weitere Vorsprung (41, 43) je gegen die Längsseitenkante hin schräg angewinkelt verläuft.

8. Anordnung nach Anspruch 7, **dadurch gekennzeichnet, dass** die vom einen Bandabschnitt (1) aus gesehene Begrenzungslinie des weiteren Vorsprunges (41, 43) mit jeder seitlichen Längskante einen Winkel (α) von ca. 40 - 60°, vorzugswaise von ca. 50°, einschliesst.

9. Anordnung nach einem der Ansprüche 1 bis 8, **dadurch gekennzeichnet, dass** mindestens zwei in Bandlängsrichtung vom einen Bandabschnitt in den anderen Bandabschnitt vorstehende Vorsprünge bzw. zungenartige Rückhalteelemente (21) angeordnet sind.

10. Anordnung nach einem der Ansprüche 1 bis 9, **dadurch gekennzeichnet, dass** entlang der Verbindungslinie zwischen den beiden Bandabschnitten (1, 5) punktgeschweisste, lasergeschweisste, pressgeprägte etc. Verbindungsstellen (51) vorgesehen sind.

11. Klemme bzw. Klemmring oder Schrumpfring mit einer Anordnung nach einem der Ansprüche 1 bis 10.

## Claims

1. An arrangement for connecting two strip end edges (3, 7) of a clamp or clamping ring or shrink ring, for example, whereby first end edge (3) has at least one tongue-like projection (21) that fits into a corresponding recess provided in second edge (7) or in second strip section (5) and whereby said projection (21) extends into said second strip section (5) essentially in the strip direction and has at least two sections (23, 25, 27, 29) that are spaced in the direction of said projection or in the strip longitudinal direction and that clamp respective regions in said second strip section (5), laterally projecting from said projection, transversely to the strip longitudinal direction, **characterised in that** in the region of each lateral longitudinal edge of the strip, in the connecting region, first edge (3) has an additional projection (41, 43) extending towards second strip section (5), and **in that** the whole outline of said tongue-type projection (21) has a rounded shape to avoid sharp edges, in order to reduce the risk of injury.

2. The arrangement according to claim 1, **characterised in that** on at least two sections (23, 25, 27, 29) spaced in the projection direction or in the strip longitudinal direction, said projection (21) clamps second strip section (5) on each side or lies in the corresponding recess of said second strip section (5), fitting closely to said recess.

3. The arrangement according to claim 1 or 2, **characterised in that** at least one part of said sections (23, 25, 27, 29) laterally projecting from said projection (21) and clamping second strip section (5) has an extension (31, 33, 35, 37) extending backwards towards first strip section (1) in the strip direction.

4. The arrangement according to claim 3, **characterised in that** said extensions (31, 33, 35, 37) of each respective lateral section (23, 25, 27, 29) which extend backwards towards first strip section (1) have a delimitation line extending at an angle to the projection direction or to the strip longitudinal direction, towards first strip section.

5. The arrangement according to claim 4, **characterised in that** each extension's (31, 33, 35, 37) delimitation line extending essentially transversely to the strip longitudinal direction forms an angle (β) of about 50-70°, preferably of about 60°, with the longitudinal direction.

6. The arrangement according to any of claims 1 to 5, **characterised in that** projection (21) has a larger width between first strip section (1) and first laterally projecting section (23, 25) than between said first projecting section and second laterally projecting section (27, 29).

7. The arrangement according to any of claims 1 to 6, **characterised in that** each additional projection (41, 43) extends at an angle towards the respective longitudinal lateral edge.

8. The arrangement according to claim 7, **characterised in that** the additional projection's (41, 43) delimitation line, viewed from first strip section (1), forms an angle (α) of about 40-60°, preferably of about 50°, with the respective lateral longitudinal edge.

9. The arrangement according to any of claims 1 to 8, **characterised in that** there are provided at least two projections or tongue-like retaining elements (21) extending in the strip longitudinal direction from first strip section into second strip section.

10. The arrangement according to any of claims 1 to 9, **characterised in that** spot-welded, laser welded, stamped, etc. connecting points (51) are provided along the connecting line between both strip sections (1, 5).

11. A clamp or clamping ring or shrink ring with an arrangement according to any of claims 1 to 10.

## Revendications

1. Dispositif pour relier deux bords d'extrémité de bande (3, 7), par exemple d'un élément de serrage ou d'une bague de serrage ou d'une bague rétractable, un premier bord d'extrémité (3) présentant au moins une saillie en forme de languette (21) qui pénètre dans un évidement correspondant prévu dans le second bord (7) ou dans la seconde section de bande (5), et la saillie (21) s'étendant globalement dans le sens de la bande jusque dans la seconde section de bande (5) et présentant au moins deux sections (23, 25, 27, 29) qui sont espacées dans le sens de la saillie ou dans le sens longitudinal de la bande et qui viennent en prise avec des zones respectives de la seconde section de bande (5), transversalement par rapport au sens longitudinal de la bande et en dépassant latéralement de la saillie, **caractérisé en ce que** dans la zone de chaque bord longitudinal latéral de la bande, le premier bord (3) présente dans la zone de la liaison une saillie supplémentaire (41, 43) dirigée vers la seconde section de bande (5), et **en ce que** l'ensemble du contour de la saillie en forme de languette (21) est arrondi pour éviter qu'il y ait des arêtes vives, afin de réduire le risque de blessure.

2. Dispositif selon la revendication 1, **caractérisé en ce que** la saillie (21), de chaque côté, vient en prise avec la seconde section de bande (5) au niveau d'au moins deux sections (23, 25, 27, 29) espacées dans le sens de la saillie ou dans le sens longitudinal de la bande, ou est appliquée dans l'évidement correspondant de la seconde section de bande (5), en venant en prise par complémentarité de forme.

3. Dispositif selon la revendication 1 ou 2, **caractérisé en ce qu'**une partie au moins des sections (23, 25, 27, 29) qui dépassent latéralement de la saillie (21) et qui viennent en prise avec la seconde section de bande (5) présente un prolongement (31, 33, 35, 37) qui revient vers la première section de bande (1) dans le sens de la bande.

4. Dispositif selon la revendication 3, **caractérisé en ce que** les prolongements (31, 33, 35, 37) de chaque section latérale (23, 25, 27, 29) qui reviennent vers la première section de bande (1) présentent chacun une ligne de délimitation qui est inclinée par rapport au sens de la saillie ou au sens longitudinal de la bande et qui est dirigée vers la première section de bande.

5. Dispositif selon la revendication 4, **caractérisé en ce que** la ligne de délimitation de chaque prolongement (31, 33, 35, 37) qui s'étend globalement transversalement par rapport au sens longitudinal de la bande définit avec le sens longitudinal un angle (β) d'environ 50-70°, de préférence d'environ 60°.

6. Dispositif selon l'une des revendications 1 à 5, **caractérisé en ce que** la saillie (21) est plus large entre la première section de bande (1) et la première section dépassant latéralement (23, 25) qu'entre ladite première section (23, 25) et la seconde section dépassant latéralement (27, 29).

7. Dispositif selon l'une des revendications 1 à 6, **caractérisé en ce que** chaque saillie supplémentaire (41, 43) est inclinée vers le bord latéral longitudinal.

8. Dispositif selon la revendication 7, **caractérisé en ce que** la ligne de délimitation de la saillie supplémentaire (41, 43), vue de la première section de bande (1), définit avec le bord longitudinal latéral un angle (α) d'environ 40-60°, de préférence d'environ 50°.

9. Dispositif selon l'une des revendications 1 à 8, **caractérisé en ce qu'**il est prévu au moins deux saillies ou éléments de retenue en forme de languettes (21) qui dépassent de la première section de bande, dans le sens longitudinal de la bande, jusque dans la seconde section de bande.

10. Dispositif selon l'une des revendications 1 à 9, **caractérisé en ce qu'**il est prévu, le long de la ligne de liaison entre les deux sections de bande (1, 5), des points de liaison (51) obtenus par soudage par points, soudage au laser, estampage, etc.

11. Elément de serrage ou bague de serrage ou bague rétractable pourvue d'un dispositif selon l'une des revendications 1 à 10.
